# EUROPEAN PATENT SPECIFICATION

(11) **EP 0 527 888 B1**
(45) Date of publication and mention of the grant of the patent: **03.04.1996**
(21) Application number: 91909607.3
(22) Date of filing: 30.04.1991
(51) Int. Cl.: G01N 27/30

(54) **ELECTROCHEMICAL MEASURING ELECTRODE**
ELEKTROCHEMISCHE MESSELEKTRODE
ELECTRODE DE MESURE ELECTROCHIMIQUE

(30) Priority: 09.05.1990 SE 9001663
(43) Date of publication of application: 24.02.1993
(73) Proprietor: SENSISTOR AB, S-581 02 Linköping (SE)
(72) Inventor: NYLANDER, Claes, S-582 44 Linköping (SE); ENGQUIST, Fredrik, S-582 62 Linköping (SE); ARMGARTH, Marten, S-582 52 Linköping (SE); SAMUELSSON, Marie, S-352 41 Växjö (SE)
(74) Representative: Berglund, Erik Wilhelm
(86) International application number: SE9100310
(87) International publication number: WO9117431

(56) References cited:
- EP-A- 0 266 432
- CH-A- 0 654 112
- PATENT ABSTRACTS OF JAPAN, vol. 11, no. 340 (P-634)(2787) 4 June 1986 ; & JP-A-62 123 349
- PATENT ABSTRACTS OF JAPAN, vol. 11, no. 291 (P-618)(2738) 20 April 1987 ; & JP-A-62 85 855
- ANALYTICAL CHEMISTRY, vol. 58, no. 13, 1986, pp. 2750-2756; L.E. FOSDICK et al.: "Amperometric Response of Microlithographically Fabricated Microelectrode Array Flow Sensors in a Thin-Layer Channel"

## Description

The present invention relates to a measuring electrode for voltammetric and amperometric measurements in liquid solutions and to a process for producing measuring electrodes.

The prior art includes electrochemical measuring cells comprising, in its most common arrangement, three electrodes: measuring electrode, counter electrode, and reference electrode. The measuring electrode is often also denoted "working electrode". The measuring electrode is where the electrochemical reaction in question takes place, while the purpose of the counter electrode is to close the electrical circuit. The purpose of the reference electrode, which in some cases can be left out, is to define the electrical potential of the test solution (the electrolyte). The reference electrode is designed so as to keep its electrical potential constant throughout the measurement, independently of the current that flows through the circuit constituted by the measuring electrode and the counter electrode. All three electrodes are connected to a so-called potentiostat which controls the potential of the measuring electrode in relation to the reference electrode (and thereby also to the electrolyte). This is done by letting the potentiostat measure the voltage between the measuring electrode and the reference electrode and regulate the magnitude of this voltage by applying a suitable voltage between the measuring electrode and the counter electrode. Practically no current is allowed to flow through the reference electrode, which only serves as a potential-measuring electrode.

At a particular potential of the measuring electrode in relation to the electrolyte there will be a transfer of charge between a particular substance in the electrolyte and the measuring electrode. The current thus obtained depends on factors such as the potential, the electrochemical properties and concentration of the substance, the electrode material, the catalytical activity of the electrode surface, the electrical conductivity of the electrolyte, the diffusion coefficient of the substance, convection in the electrolyte, etc.

A common method for studying the electrochemical properties of electrodes, as well as determining the concentration of a substance in a solution, is voltammetry. The basic principle involves varying the electrical potential of the measuring electrode and recording the resulting current as a function of this potential. Common is so-called cyclic voltammetry where the potential is varied linearly with time between a maximum and a minimum value and where the result is recorded by plotting the current as a function of the potential. The result from such a measurement does, however, depend on all the factors that were listed in the previous paragraph. In particular, the magnitude of the diffusion coefficient of the substance makes the result dependent on the speed with which the potential is being varied. The limited diffusion of the substance towards the electrode surface causes an inertia in the system, that complicates the analysis considerably. Besides being determined by diffusion, the transport of molecules towards the electrode is also strongly affected by movements in the solution (convection). This, in turn, includes mechanical convection and thermal convection. In laboratory work the mass transport is often being controlled by vivid and well controlled stirring of the test solution. Stirring is sometimes avoided by using so-called Wall-Jet Electrodes where the electrode surface is exposed to a jet of test solution. Another technique is to use a Rotating Electrode. The difficulties associated with the current being a function, not only of potential but also of time, makes voltammetry more suitable for qualitative analysis than for quantitative measurements.

The influence that molecular transport limitation has on the current from an electrode is clearly noticeable in so-called chrono-amperometry where the current is measured as a function of time after the potential has been rapidly changed from one constant magnitude to another.

This is for example done in such a way that the potential is changed from a magnitude, where the substance in question does not give rise to a current, to a magnitude which is sufficiently high for the current to be independent of the applied voltage and dependent only on concentration and molecular transport. Most electrodes do then exhibit so-called Cottrell behavior, which means that the current declines in inverse proportion to the square-root of time. After a short while, depending on the diffusion coefficient of the substance, the current will have declined to a low level where its magnitude is determined by convection in the solution. The current is often kept relatively constant by stirring the solution in a well controlled manner. However, the current does then become very sensitive to variations in the stirring rate which is difficult to control in many practical applications.

The properties of electrochemical electrodes as described above are described in more detail in most of the advanced text books on electrochemical analysis, for example in: Electrochemical Methods - Fundamentals and Applications by Allen J. Bard and Larry R. Faulkner (John Wiley & Sons 1980).

The problem of currents from prior art electrodes declining quickly and being very sensitive to movements in the test solution strongly limits the practical use of such electrodes. This is true for laboratory applications but even more so in applications outside the laboratories. Examples are the use of electrodes in various chemical analyzers and in industrial processes where the flow of liquid and thermal convection are both difficult to control to a sufficient extent.

A possible solution to the abovementioned problems has turned out to be so-called ultramicroelectrodes, i.e. electrodes with extremely small geometrical dimensions (see for example "Voltammetry with Microscopic Electrodes in New Domains" by R. Mark Wrightman in Science Vol. 240, 1988, p. 415). If an electrode can be made so small that its measures are in the order of micrometres, or smaller, then so-called non-linear diffusion effects will result in a fraction of the current which does not decline. Such electrodes has turned out, theoretically as well as experimentally, to have further advantages as compared with electrodes of conventional size. Among these are worth mentioning; low sensitivity to flow and convection, low electrical capacitance, low background current and higher tolerance to high resistance in the test solution.

The most common design of these ultramicroelectrodes is the so-called disc microelectrode which is made by casting a narrow fibre of electrical conductive material into a glass (or plastic) rod. The rod is polished at one end to expose only the circular cross section of the fibre to the test solution. Such electrodes are being produced commercially to rather high costs and very little improvements on this design has been made.

The main disadvantage of these ultramicroelectrodes (sometimes called microelectrodes only) is that, due to their small size, they produce very small currents. Special signal amplifiers and electrical screening precautions are therefore often needed for handling the minute signals. Another disadvantage is that these electrodes are produced more or less manually and do therefore tend to be rather expensive.

There have been attempts to make microdisc electrodes that produce more current by casting a bundle of fibres into a plastic rod. The current is then increased but not in direct proportion to the number of fibres because the fibres compete for the substance in the solution. The competition between adjacent fibres also has the effect that it counteracts the advantages of microdisc electrodes. Therefore, bundles of fibres is an improvement but is no solution to the problem of convection sensitivity of electrodes.

An attempt to further improve the fibre bundle type microdisc electrodes has been reported in European Patent Application 0266432 where the end of the fibres where etched a short distance into the rod. This had some stabilizing effect on the current but according to Table 1 in said patent application the current was 30-40% higher when the solution was flowing than it was when the solution stopped flowing.

Another type of microelectrodes, which give larger currents than disc microelectrodes, is the so-called band microelectrodes. These are characterized in that the electrically conductive part of the electrode, which is brought into contact with the solution has the shape of a very narrow band. The fact that one of the electrodes dimensions is still microscopic has the effect that the current does not decline as quickly as it does at a conventional electrode. Instead of declining in proportion to the inverse square root of time it declines in proportion to the inverse of a logarithmic function of lime. This results in a much more slowly declining current and therefore a significant improvement as compared with conventional electrodes. As the band electrode gives a higher, but less stable, current than the microdisc electrode it can be regarded as a compromise between the conventional electrode and the microdisc electrode.

It is an aim of the present invention to minimize the undesired effects that diffusion limitations in the solution gives rise to at a conventional electrode, without having to limit the electrical signal (current) to an inconveniently low level and to provide a measuring electrode which produces a stable current of easily measurable magnitude which is not sensitive to convection or other movements in the test solution.

The invention as defined in claim 1 defines a measuring electrode which comprises a narrow slit or elongated recess in insulating material and that the electrically conductive material of the electrode is arranged at the bottom of said narrow recess and that the depth of the narrow recess is at least five times the width of the narrow recess.

If the width of the slot, and especially the width/depth ratio is made too large then the purpose of the Invention will not be fulfilled. The stability of the electrode improves gradually as the width/depth ratio is decreased. The width should not exceed 10 micrometres and the width/depth ratio should not exceed 1/5. A suitable, but by no means limiting for the purpose of the invention, width is 0.1 micrometre and a suitable but also not limiting width/depth ratio is 1/50. One of the advantageous features of the invention is that it lends itself to considerable variation in terms of geometrical design. The preferred depth, width, and length of the slot on each particular occation depends on various parameters related to the substance to be measured and the solution in which this substance is present, as well as the properties of other substances present in the same solution.

The longer the slot is the larger will the magnitude of the current be. The length of the slot should be chosen so as to attain a current which is easily measured without the need for very specialized instrumentation and electrical screening arrangements. When suitable, the slot can be divided into shorter slots distributed along a line and electrically interconnected in order to function as a single, very long, slot.

A preferred embodiment of the invention comprises an insulating material (1) onto which is arranged a layer (2) of electrically conductive material onto which in turn is arranged a layer (3) of insulating material which extends beyond the electrically conductive layer (2) in such a way that a narrow slot (4) is formed between insulating materials (1) and (3) and where the edge of the electrically conductive layer constitutes the bottom of said slot.

This embodiment has several advantageous features. Because it comprises layers arranged on a substrate material it can be given a mechanically very robust design. Also, because the width of the slot is determined by the thickness of a layer which at no instance need to be self-sustaining it is relatively easy to bring the width down to an absolute minimum.

The length of the slot in the preferred embodiment is determined by the shape and size of the area or areas which are coated with layers (2) and (3). As explained in the foregoing the current is essentially proportional to the length of the slot and it is therefore advantageous to make the slot as long as possible. This is readily achieved in this embodiment because the shape of the area or areas can be designed with considerable freedom.

The insulating material (1) can be chosen from a variety of plastic, ceramic or glass materials. It can also suitably be a purer material such as aluminium oxide, silicon nitride or tantalum pentoxide.

The insulating material (1) may also consist of a thin layer of insulating material applied onto a substrate material which does not need to be insulating. From a manufacturing point of view the most important examples of this are layers of silicon dioxide, silicon nitride, and tantalum pentoxide, which can be applied to a semiconducting substrate by means which are known in semiconductor processing technology.

In the embodiment described above where the insulating material (3) is in the form of a thin layer it is of vital importance for the stability of the electrode that this material is a good electrical insulator as well as chemically very resistant. Chemical resistance means in this context that the material is not dissolved by or penetrated by the chemical substances that it is exposed to during its manufacture and use. Examples of suitable materials are silicon nitride, aluminium oxide and tantalum pentoxide. Also some polymeric materials can be applied. A very useful, but not limiting, example of such a polymer is polyimide.

Within the scope of the present invention is also a process for manufacturing the measuring electrode. This process aims at producing such electrodes with very high precision and reproducibility, and is highly suitable for low-cost mass production. The process comprises a sequence of steps each of which are known *per se* in the microelectronic industry but when selected and combined as described below they result, after process optimization, in a unique process which enables the manufacture of the most preferred embodiment of the invented measuring electrode.

The process comprises the following sequence of steps:

An insulating material (1), or a non-insulating material coated with an insulating material, is used as a substrate onto which a layer (2) of electrically conductive material is vacuum deposited. The electrically conductive layer (2) is thereafter coated with a layer (3) of electrically insulating material. The insulating layer (3) and the conductive layer (2) are both etched away on parts of the surface by means of photolithographic technique. The conductive layer (2) is thereafter etched further in under the insulating layer (3) by means of an etching process to which the insulating layers (1) and (3) are resistant. This processing sequence is especially suitable for making the invented electrode in that it enables the geometrical dimensions to be optimized with respect to electrode performance.

It can be highly advantageous to use a separate photolithographic mask which is used to pattern the conductive layer (2) before it is being coated with the insulating layer (3). The reason for doing this is that it allows a design in which there is no conductive material in areas where that would be unnecessary or undesirable.

The invention is further described, by way of non-limitative example, with reference to the accompanying drawings (not to scale), in which:

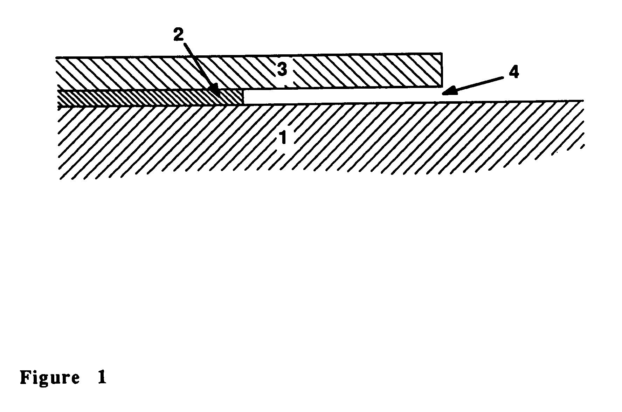

Figure 1 shows a cross-section through the functional part of a measuring electrode according to the invention. The drawing is made very much out of scale. In a preferred embodiment the width of the slot (equal to the thickness of layer (2)) is only 1/50 of the depth of the same slot.

Figure 2 shows a perspective view of one possible design of the preferred embodiment of the measuring electrode.

An example of how a measuring electrode in accordance with the invention can be arranged and manufactured is illustrated by the following description:

A silicon wafer of the kind which is commonly used for the manufacture of integrated microelectronic circuits is carefully cleaned in a manner well known to those skilled in the art of integrated circuit manufacture.

The surface of the silicon wafer is thereafter provided with an insulating layer of silicon dioxide by means of an oxidation process which is known art. This can for example be done by exposing the wafer to water vapour in an argon atmosphere at a temperature of 1200 °C during 80 minutes. The resulting oxide layer will be approximately one micrometre thick and constitutes the insulating material (1) in the drawings.

The wafer is thereafter placed in a vacuum chamber which is pumped down to a vacuum of 10⁻⁷ torr (=133x10⁻⁷ Pa). Physical Vapour Deposition of metal onto the surface is then done according to the following sequence: First, a minute amount of chromium is deposited onto the surface. Thereafter, without breaking the vacuum, a layer of gold is deposited onto the surface, and finally the gold layer is coated with a minute amount of chromium. The complete layer of metal constitutes layer (2) in the drawings. The thickness of the metal layer can suitably be 200 nanometres while the amount of chromium should not exceed 1% of the total amount. The aim of applying this small amount of chromium is to promote the adhesion between the gold layer and the adjacent insulating layers.

The wafer is thereafter moved over to a vacuum chamber designed for Chemical Vapour Deposition and a layer of silicon nitride is deposited onto the wafer in a well controlled manner in order to attain a perfectly homogeneous and dense layer which can withstand the following process steps and the subsequent use of the electrode.

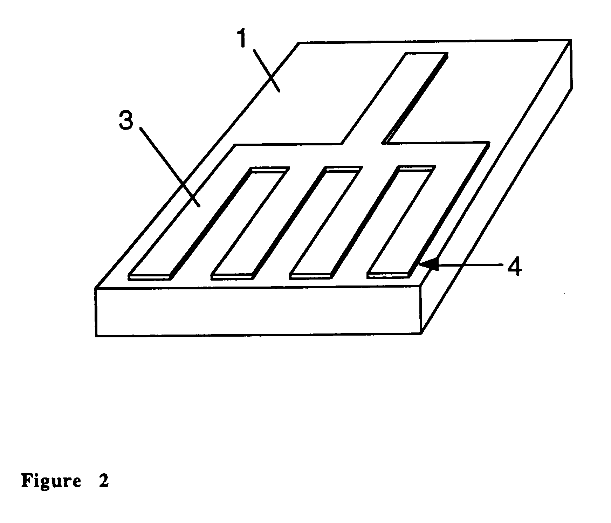

The wafer is thereafter coated with photoresist which is applied, cured, exposed, and developed as is well known art in the microelectronic industry. A convenient pattern to use is the fork-like pattern depicted in Figure 2.

The wafer is thereafter placed in a plasma chamber designed for Reactive Ion Etching or alike process in which the silicon nitride layer is etched away in areas that are not protected by the photoresist.

Thereafter the wafer is exposed to a gold etching solution of iodide and potassium iodide and the unprotected areas of metal are etched away. When all visible gold has been removed the wafer is moved into a more diluted solution of etchant where the etching process, under vivid stirring, is allowed to continue a few micrometres in under the nitride layer.

After the gold etching has been completed the wafer is dipped briefly into a chromium etching solution in order to remove residual chromium that may be left on the insulating surfaces.

The entire electrode, except for a small area at the top or the "fork handle" is masked off and the silicon nitride is etched away in this area to provide an electrical contact pad for connecting the electrode to measuring instrumentation.

Devices made as described herein can be further treated and used in many of the ways previously proposed in respect to measuring electrodes.

The present invention is susceptible to any modifications and variations falling within the scope of the claims.

## Claims

1. Measuring electrode **characterized in** that it comprises a narrow slit or elongated recess (4) in insulating material (1, 3) and that the electrically conductive material (2) of the electrode is arranged at the bottom of said narrow recess and that the depth of the narrow recess is at least five times the width of the narrow recess.

2. Measuring electrode according to claim 1 **characterized in** that the depth of the narrow recess is at least fifty times the width of the narrow recess and that the width is less than 10 micrometres.

3. Measuring electrode according to claim 1 **characterized in** that the narrow recess is very long and extends over a large part of the device surface or that many narrow recesses are arranged over the device surface.

4. Measuring electrode according to claim 1 **characterized in** that the narrow recess (4) is constituted by a thin space between two insulating materials (1) and (3).

5. Measuring electrode according to claim 4 **characterized in** that on an insulating material (1) is arranged a layer (2) of electrically conductive material and that on this electrically conductive material is arranged an additional layer (3) of insulating material which extends beyond the electrically conductive layer (2) in such a way that in certain areas of the surface a narrow recess (4) appears between the insulating materials (1) and (3), and the conductive layer (2) constituting the bottom of the narrow recess.

6. Measuring electrode according to claim 4 **characterized in** that the electrically insulating material (1) comprises aluminium oxide, tantalum pentoxide, nitride or ceramic material.

7. Measuring electrode according to claim 4 **characterized in** that the electrically insulating material (1) comprises a layer of insulating material arranged onto a material that need not be electrically insulating.

8. Measuring electrode according to claim 4 **characterized in** that the electrically insulating material (3) comprises aluminium oxide, tantalum pentoxide, nitride or polyimide.

9. A process for producing measuring electrodes according to claim 4 and comprising a narrow elongated recess between two insulating materials **characterized of** the following steps:
a, a layer (2) of electrically conductive material is vacuum deposited onto an insulating material (1).
b, a layer (3) of electrically insulating material is vacuum deposited on top of the conductive layer (2).
c, the two layers (2) and (3) are etched away in certain areas of the surface.
d, the electrically conductive layer (2) is thereafter etched further so that a narrow recess is formed between the two insulating materials (1) och (3).

10. A process according to claim 9 in which the conductive layer (2), or the insulating layer (3), or both are deposited through a mask so that the layer or layers only cover parts of the surface even before the etching in step c is commenced.

## Patentansprüche

1. Messelektrode, dadurch gekennzeichnet, dass sie einen engen Schlitz oder eine langgestreckte Ausnehmung (4) in Isoliermaterial (1, 3) aufweist, dass das elektrisch leitfähige Material (2) der Elektrode am Grunde der genannten engen Ausnehmung angeordnet ist, und dass die Tiefe der engen Ausnehmung mindestens das Fünffache der Dicke der engen Ausnehmung beträgt.

2. Messelektrode nach Anspruch 1, dadurch gekennzeichnet, dass die Tiefe der engen Ausnehmung mindestens das Fünfzigfache der Dicke der engen Ausnehmung ausmacht und dass diese Dicke weniger als 10 Mikrometer beträgt.

3. Messelektrode nach Anspruch 1, dadurch gekennzeichnet, dass die enge Ausnehmung sehr lang ist und sich über einen grossen Teil der Oberfläche der Vorrichtung erstreckt, oder dass viele enge Ausnehmungen über der Oberfläche der Vorrichtung angeordnet sind.

4. Messelektrode nach Anspruch 1, dadurch gekennzeichnet, dass die enge Ausnehmung (4) von einem dünnen Zwischenraum zwischen zwei Isoliermaterialien (1) und (3) gebildet wird.

5. Messelektrode nach Anspruch 4, dadurch gekennzeichnet, dass auf einem Isoliermaterial (1) eine Schicht (2) aus einem elektrisch leitfähigen Material angeordnet ist, und dass auf diesem elektrisch leitfähigen Material eine weitere Schicht (3) Isoliermaterial aufgebracht ist, die sich über die elektrisch leitfähige Schicht (2) hinaus derart erstreckt, dass an bestimmten Gebieten der Oberfläche eine enge Ausnehmung (4) zwischen den Isoliermaterialien (1) und (3) vorhanden ist, wobei die leitfähige Schicht (2) den Grund der engen Ausnehmung bildet.

6. Messelektrode nach Anspruch 4, dadurch gekennzeichnet, dass das elektrisch isolierende Material (1) aus Aluminiumoxid, Tantalpentoxid, Nitrid oder Keramik besteht.

7. Messelektrode nach Anspruch 4, dadurch gekennzeichnet, dass das elektrisch isolierende Material (1) eine Schicht aus Isoliermaterial ist, welche auf einem Material angeordnet ist, das nicht elektrisch isolierend zu sein braucht.

8. Messelektrode nach Anspruch 4, dadurch gekennzeichnet, dass das elektrisch isolierende Material (3) Aluminiumoxid, Tantalpentoxid, Nitrid oder Polyimid ist.

9. Verfahren zur Herstellung von Messelektroden nach Anspruch 4, welche eine enge langgestreckte Ausnehmung zwischen zwei Isoliermaterialien aufweisen, gekennzeichnet durch die folgenden Schritte:
a) Eine Schicht (2) aus elektrisch leitfähigem Material wird im Vakuum auf einem Isoliermaterial (1) abgeschieden.
b) Eine Schicht (3) aus elektrisch isolierendem Material wird auf der leitfähigen Schicht im Vakuum abgeschieden.
c) Die beiden Schichten (2) und (3) werden an bestimmten Stellen der Oberfläche weggeätzt.
d) Die elektrisch leitfähige Schicht (2) wird dann weiter weggeätzt, so dass sich eine enge Ausnehmung zwischen den zwei Isoliermaterialien (1) und (3) bildet.

10. Verfahren nach Anspruch 9, bei dem die leitfähige Schicht (2) oder die Isolierschicht (3) oder beide durch eine Maske hindurch abgeschieden werden, so dass die Schicht bzw. Schichten die Oberfläche nur zum Teil bedekken, bevor der Ätzvorgang in Schritt c) begonnen wird.

## Revendications

1. Électrode de mesurage, caractérisée en ce qu'elle comprend une fente étroite ou un évidement allongé (4) dans un matériau isolant (1, 3), et que le matériau électroconducteur (2) de l'électrode est arrangé au fond du dit évidement étroit et que la profondeur de l'évidement étroit est au moins cinq fois l'épaisseur de l'évidement étroit.

2. Électrode selon la revendication 1, caractérisée en ce que la profondeur de l'évidement étroit est au moins cinquante fois l'épaisseur de l'évidement étroit qui, elle, est inférieure à 10 micromètre.

3. Électrode selon la revendication 1, caractérisée en ce que l'évidement étroit est très long et s'étend au-dessus d'une grande partie de la surface du dispositif, ou qu'une pluralité d'évidements étroits sont arrangés sur la surface du dispositif.

4. Électrode selon la revendication 1, caractérisée en ce que l'évidement étroit (4) est constitué par un espace mince entre deux matériaux isolants (1) et (3).

5. Électrode selon la revendication 4, caractérisée en ce qu'une couche (2) d'un matériaux électroconducteur est arrangée au-dessus d'un matériaux isolant, et qu'une couche additionnelle (3) de matériau isolant s'étendant au-delà de la couche électroconductrice (2) est arrangée sur ce matériaux électroconducteur, de telle sorte qu'un évidement étroit (4) apparaît dans certaines régions de la surface entre les matériaux isolants (1) et (3), la couche conductrice (2) constituant le fond de l'évidement étroit.

6. Électrode selon la revendication 4, caractérisée en ce que le matériau isolant électrique (1) comprend l'oxyde d'aluminium, le pentoxyde de tantale, un nitride ou un matériau céramique.

7. Électrode selon la revendication 4, caractérisée en ce que le matériau isolant électrique (1) comprend une couche de matériau isolant arrangée au-dessus d'un matériau qui n'a pas besoin d'être un isolant électrique.

8. Électrode selon la revendication 4, caractérisée en ce que le matériau isolant électrique (3) comprend l'oxyde d'aluminium, le pentoxyde de tantale, un nitride ou un polyimide.

9. Procédé pour la fabrication d'électrodes de mesurage selon la revendication 4 et comprenant un évidement étroit allongé entre deux matériaux isolants, caractérisé par les étapes suivants:
a) une couche de matériau électroconducteur (2) est déposée sous vide sur un matériau isolant (1);
b) une couche de matériau isolant électrique (3) est déposée sous vide au-dessus de la couche conductrice (2);
c) les deux couches (2) et (3) sont enlevées par gravure dans certaines régions de la surface;
d) la couche électroconductrice (2) est ensuite continuée à être enlevée par gravure, de telle sorte qu'un évidement étroit est formé entre les deux matériaux isolants (1) et (3).

10. Procédé selon la revendication 9, dans lequel la couche conductrice (2) ou la couche isolante (3), ou les deux, sont déposées à travers d'un masque de sorte que la couche ou les couches ne couvrent qu'une partie de la surface avant même que la gravure dans l'étape c) ne soit entamée.
